# EUROPEAN PATENT APPLICATION

(11) **EP 2 672 716 A2**
(43) Date of publication of application: **11.12.2013**
(21) Application number: 13001375.8
(22) Date of filing: 18.03.2013
(51) Int. Cl.: H04N 13/04

(54) **Image display apparatus and method for operating the same**

(30) Priority: 08.06.2012 KR 20120061627
(71) Applicant: LG Electronics, Inc., Seoul, 150-721 (KR)
(72) Inventor: Lee, Jaekwang, 137-724 Seoul (KR); Lee, Changguk, 137-724 Seoul (KR); Park, Taesoo, 137-724 Seoul (KR); Kim, Jooyoung, 137-724 Seoul (KR)
(74) Representative: Beyer, Andreas

(57) **Abstract**

An image display apparatus and a method for operating the same are disclosed. The method includes storing (S1110) a first captured image that does not include a viewer image being an image of a viewer as a background image, calculating (S1130) a position of the viewer based on a differential image between the background image and a second captured image including the viewer image, and changing (S1140) multi-viewpoint images based on the position of the viewer and displaying the changed multi-viewpoint images.

## Description

### CROSS-REFERENCE TO RELATED APPLICATION

This application claims the benefit of Korean Patent Application No. 10-2012-0061627, filed on June 08, 2012 in the Korean Intellectual Property Office, the disclosure of which is incorporated herein by reference.

### BACKGROUND OF THE INVENTION

### 1. Field of the invention

The present invention relates to an image display apparatus and a method for operating the same, and more particularly, to an image display apparatus and a method for operating the same, which can fast track the accurate position of a viewer during glasses-free three-dimensional (3D) visualization.

### 2. Description of the Related Art

An image display apparatus has a function of displaying images to a user. The image display apparatus can display a broadcast program selected by the user on a display from among broadcast programs transmitted from broadcasting stations. The recent trend in broadcasting is a worldwide shift from analog broadcasting to digital broadcasting.

As it transmits digital audio and video signals, digital broadcasting offers many advantages over analog broadcasting, such as robustness against noise, less data loss, ease of error correction, and the ability to provide high-definition, clear images. Digital broadcasting also allows interactive viewer services, compared to analog broadcasting.

### SUMMARY OF THE INVENTION

Therefore, the present invention has been made in view of the above problems, and it is an object of the present invention to provide an image display and a method for operating the same, which can fast track the position of a viewer during glasses-free 3D visualization.

It is another object of the present invention to provide an image display and a method for operating the same, which can increase user convenience.

In accordance with an aspect of the present invention, the above and other objects can be accomplished by the provision of a method for operating an image display apparatus that displays multi-viewpoint images, including storing a first captured image that does not include a viewer image being an image of a viewer as a background image, calculating a position of the viewer based on a differential image between the background image and a second captured image including the viewer image, and changing multi-viewpoint images based on the position of the viewer and displaying the changed multi-viewpoint images.

In accordance with another aspect of the present invention, there is provided an image display apparatus including a display for displaying multi-viewpoint images, a camera module for acquiring a first captured image that does not include a viewer image being an image of a viewer and a second captured image including the viewer image, and a controller for changing multi-viewpoint images based on a position of the viewer calculated using a differential image between the background image and the second captured image, and displaying the changed multi-viewpoint images.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates the exterior of an image display apparatus according to an embodiment of the present invention;
FIG. 2 illustrates a lens unit and a display separately in the image display apparatus illustrated in FIG. 1;
FIG. 3 is a block diagram of the image display apparatus according to an embodiment of the present invention;
FIG. 4 is a block diagram of a controller illustrated in FIG. 3;
FIG. 5 illustrates a method for controlling a remote controller illustrated in FIG. 3;
FIG. 6 is a block diagram of the remote controller illustrated in FIG. 3;
FIG. 7 illustrates formation of 3D images by combining left-eye and right-eye images;
FIG. 8 illustrates different depth illusions of 3D images according to different disparities between a left-eye image and a right-eye image;
FIG. 9 is a view referred to for describing the principle of a glasses-free 3D image display apparatus;
FIGS. 10 to 14 are views referred to for describing the principle of an image display apparatus that displays multi-viewpoint images;
FIG. 15 is a flowchart illustrating a method for operating the image display apparatus according to an embodiment of the present invention; and
FIGS. 16 to 27 are views referred to for describing the method for operating the image display apparatus, illustrated in FIG. 15.

### DETAILED DESCRIPTION OF THE PREFERRED EMBODIMENTS

Embodiments of the present invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

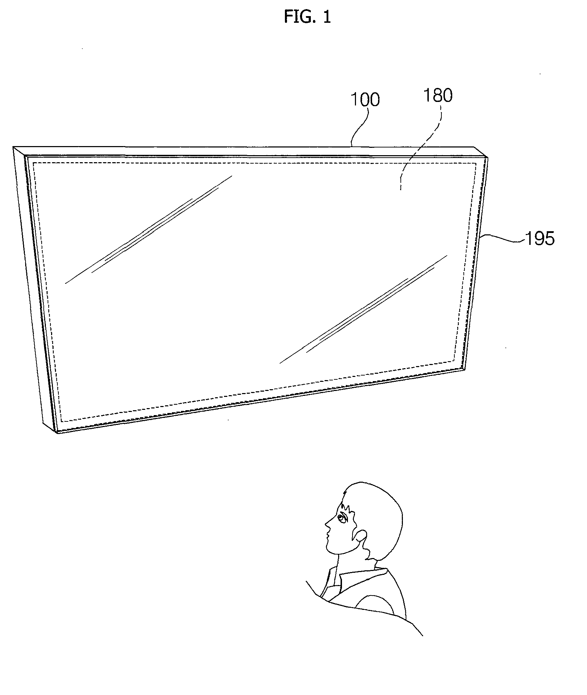

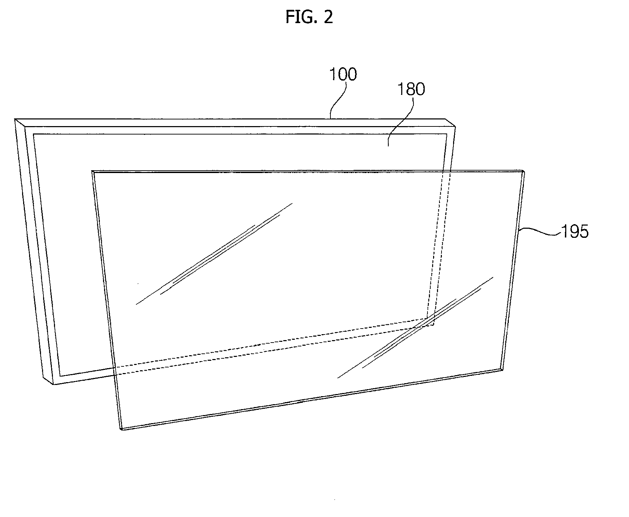

FIG. 1 illustrates the exterior of an image display apparatus according to an embodiment of the present invention and FIG. 2 illustrates a lens unit and a display separately in the image display apparatus illustrated in FIG. 1.

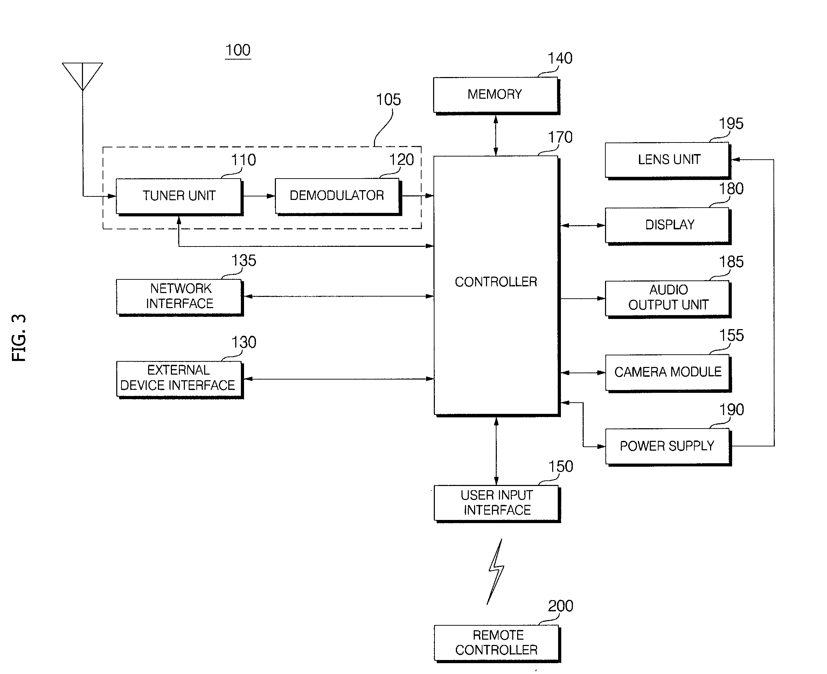

Referring to FIGS. 1 and 3, the image display apparatus according to the embodiment of the present invention can display a stereoscopic image, that is, a three-dimensional (3D) image. In the embodiment of the present invention, the image display apparatus is a glasses-free 3D image display apparatus, by way of example.

For glasses-free 3D visualization, an image display apparatus 100 includes a display 180 and a lens unit 195.

The display 180 may display an input image, especially multi-viewpoint images according to an embodiment of the present invention. Specifically, the multi-viewpoint images may be displayed, with the sub-pixels of the multi-viewpoint images arranged in a predetermined pattern.

The lens unit 195 may be disposed in a user direction, spaced from the display 180 by a predetermined gap. The display 180 and the lens unit 195 are shown in FIG. 2 as separated from each other.

The lens unit 195 may operate in a lenticular scheme using a lenticular lens or in a parallax scheme using a slit array, or may use a microlens array. The embodiment of the present invention is described, centering on the lenticular scheme.

FIG. 3 is a block diagram of the image display apparatus according to an embodiment of the present invention. Referring to FIG. 3, then image display apparatus 100 according to the embodiment of the present invention includes a broadcasting receiver 105, an external device interface 130, a network interface 135, a memory 140, a user input interface 150, a camera unit 155, a sensor unit (not shown), a controller 170, a display 180, an audio output unit 185, a power supply 190, and the lens unit 195.

The broadcasting receiver 105 may include a tuner unit 110, a demodulator 120, and the network interface 135. As needed, the broadcasting receiver 105 may be configured so as to include only the tuner unit 110 and the demodulator 120 or only the network interface 135.

The tuner unit 110 selects a Radio Frequency (RF) broadcast signal corresponding to a channel selected by a user or an RF broadcast signal corresponding to each of pre-stored channels from among a plurality of RF broadcast signals received through an antenna and downconverts the selected RF broadcast signal into a digital Intermediate Frequency (IF) signal or an analog baseband Audio/Video (A/V) signal.

More specifically, if the selected RF broadcast signal is a digital broadcast signal, the tuner unit 110 downconverts the selected RF broadcast signal into a digital IF signal, DIF. On the other hand, if the selected RF broadcast signal is an analog broadcast signal, the tuner unit 110 downconverts the selected RF broadcast signal into an analog baseband A/V signal, CVBS/SIF. That is, the tuner unit 110 may be a hybrid tuner capable of processing not only digital broadcast signals but also analog broadcast signals. The analog baseband A/V signal CVBS/SIF may be directly input to the controller 170.

The tuner unit 110 may be capable of receiving RF broadcast signals from an Advanced Television Systems Committee (ATSC) single-carrier system or from a Digital Video Broadcasting (DVB) multi-carrier system.

The tuner unit 110 may sequentially select a number of RF broadcast signals corresponding to all broadcast channels previously stored in the image display apparatus 100 by a channel add function from a plurality of RF signals received through the antenna and may downconvert the selected RF broadcast signals into IF signals or baseband A/V signals.

The tuner unit 110 may include a plurality of tuners for receiving broadcast signals on a plurality of channels. Alternatively, the tuner unit 110 may be implemented into a single tuner for simultaneously receiving broadcast signals on a plurality of channels.

The demodulator 120 receives the digital IF signal DIF from the tuner unit 110 and demodulates the digital IF signal DIF.

The demodulator 120 may perform demodulation and channel decoding on the digital IF signal DIF, thereby obtaining a stream signal TS. The stream signal TS may be a signal in which a video signal, an audio signal and a data signal are multiplexed.

The stream signal TS may be input to the controller 170 and thus subjected to demultiplexing and A/V signal processing. The processed video and audio signals are output to the display 180 and the audio output unit 185, respectively.

The external device interface 130 may transmit data to or receive data from a connected external device. For data transmission and reception, the external device interface 130 may include an A/V Input/Output (I/O) unit (not shown) and/or a wireless communication module (not shown).

The external device interface 130 may be connected to an external device such as a Digital Versatile Disk (DVD) player, a Blu-ray player, a game console, a camera, a camcorder, a computer (e.g. a laptop computer), or a set-top box, wirelessly or by wire. Then, the external device interface 130 transmits and receives signals to and from the external device.

The A/V I/O unit of the external device interface 130 may receive video and audio signals from the external device. The wireless communication module of the external device interface 130 may perform short-range wireless communication with other electronic devices.

The network interface 135 serves as an interface between the image display apparatus 100 and a wired/wireless network such as the Internet. The network interface 135 may receive content or data from the Internet or from a Content Provider (CP), or a Network Provider (NP) over a network.

The memory 140 may store various programs necessary for the controller 170 to process and control signals, and may also store processed video, audio and data signals.

The memory 140 may temporarily store a video, audio and/or data signal received from the external device interface 130. The memory 140 may store information about broadcast channels by the channel-add function such as a channel map.

While the memory 140 is shown in FIG. 3 as configured separately from the controller 170, to which the present invention is not limited, the memory 140 may be incorporated into the controller 170, for example.

The user input interface 150 transmits a signal received from the user to the controller 170 or transmits a signal received from the controller 170 to the user.

For example, the user input interface 150 may receive various user input signals such as a power-on/off signal, a channel selection signal, and a screen setting signal from a remote controller 200, provide the controller 170 with user input signals received from local keys (not shown), such as inputs of a power key, a channel key, and a volume key, and a setting key, transmit a user input signal received from the sensor unit (not shown) for sensing a user gesture to the controller 170, or transmit a signal received from the controller 170 to the sensor unit.

The controller 170 may demultiplex the stream signal TS received from the tuner unit 110, the demodulator 120, or the external device interface 130 into a number of signals and process the demultiplexed signals into audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

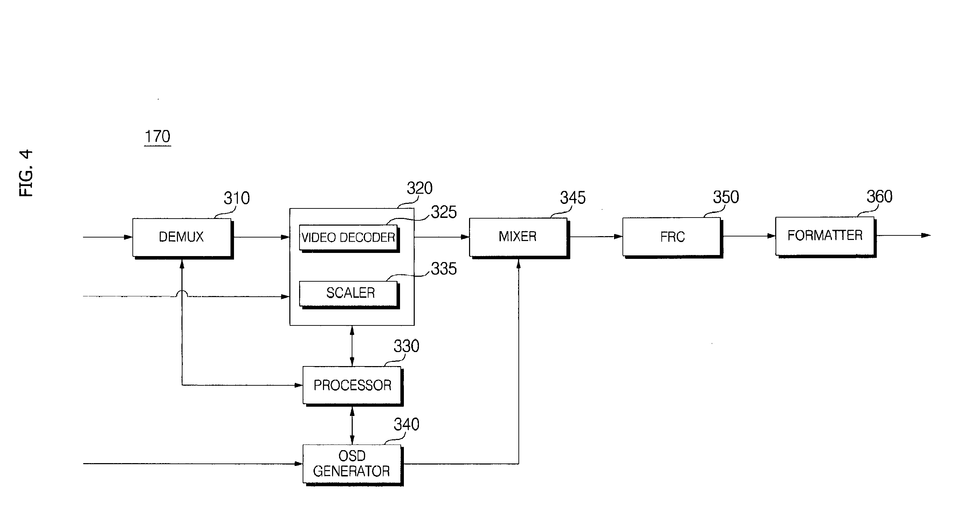

While not shown in FIG. 3, the controller 170 may include a demultiplexer (DEMUX) and a video processor, which will be described later with reference to FIG. 4.

In addition, the controller 170 may provide overall control to the image display apparatus 100. For example, the controller 170 may control the tuner unit 110 to select an RF broadcast signal corresponding to a user-selected channel or a pre-stored channel.

The controller 170 may control the image display apparatus 100 according to a user command received through the user input interface 150 or according to an internal program.

The controller 170 may also control the display 180 to display an image. The image displayed on the display 180 may be a two-dimensional (2D) or three-dimensional (3D) still image or video.

The controller 170 may control a particular object in the image displayed on the display 180 to be rendered as a 3D object. For example, the particular object may be at least one of a linked Web page (e.g. from a newspaper, a magazine, etc.), an Electronic Program Guide (EPG), a menu, a widget, an icon, a still image, a video, or text.

The 3D object may be processed so as to have a different sense of depth from that of an image displayed on the display 180. Preferably, the 3D object may be processed to look protruding, compared to the image displayed on the display 180.

The controller 170 may locate the user based on an image captured by the camera unit 155. Specifically, the controller 170 may measure the distance (a z-axis coordinate) between the user and the image display apparatus 100. In addition, the controller 170 may calculate x-axis and y-axis coordinates corresponding to the position of the user on the display 180.

The image display apparatus 100 may further include a channel browsing processor (not shown) for generating thumbnail images corresponding to channel signals or external input signals. The channel browsing processor may extract some of the video frames of each of stream signals TS received from the demodulator 120 or stream signals received from the external device interface 130 and display the extracted video frames on the display 180 as thumbnail images. The thumbnail images may be output to the controller 170 after they are decoded together with a decoded image to a stream. The controller 170 may display a thumbnail list including a plurality of received thumbnail images on the display 180.

The thumbnail list may be displayed on a part of the display 180 with an image displayed on the display 180, that is, as a compact view, or the thumbnail list may be displayed in full screen on the display 180. The thumbnail images of the thumbnail list may be updated sequentially.

The display 180 generates drive signals by converting a processed video signal, a processed data signal, an On Screen Display (OSD) signal, and a control signal received from the controller 170 or a video signal, a data signal, and a control signal received from the external device interface 130.

The display 180 may be various types of displays such as a Plasma Display Panel (PDP), a Liquid Crystal Display (LCD), an Organic Light-Emitting Diode (OLED) display, and a flexible display. The display 180 may also be capable of displaying 3D images.

As described above, the display 180 is a glasses-free 3D display according to the embodiment of the present invention. For glasses-free 3D visualization, the image display apparatus 100 includes the lens unit 195 that operates in the lenticular scheme.

The power supply 190 supplies power to the whole image display apparatus 100 so as to operate each module or unit of the image display apparatus 100.

The display 180 may be divided into a 2D image area and a 3D image area. In this case, the power supply 190 may supply first and second different power voltages to the lens unit 195 under the control of the controller 170.

The lens unit 195 changes the travel direction of light according to an applied power voltage.

The first power voltage may be applied to a first area of the lens unit 195 corresponding to the 2D image area of the display 180. Then, the lens unit 195 may emit light in the same direction as light emitted from the 2D image area of the display 180. Accordingly, the user identifies the resulting displayed 2D image as a 2D image.

In another example, the second power voltage may be applied to a second area of the lens unit 195 corresponding to the 3D image area of the display 180 and thus light emitted from the 3D image area of the display 180 may be scattered. Owing to the resulting 3D effect, the user can identify a displayed 3D image as a stereoscopic image without the need for wearing on special glasses.

The lens unit 195 may be disposed in a user direction, apart from the display 180. Particularly, the lens unit 195 may be positioned in parallel to the display 180 or inclined at a specific angle with respect to the display 180. The lens unit 195 may also be convex or concave with respect to the display 180. Meanwhile, the lens unit 195 may take the form of a sheet. Thus, the lens unit 195 according to the embodiment of the present invention may be referred to as a lens sheet.

The display 180 may also be a touch screen that can be used not only as an output device but also as an input device.

The audio output unit 185 may receive a processed audio signal from the controller 170 and output the received audio signal as voice.

The camera module 155 captures a user. The camera module 155 may include, but not limited to, a single camera. When needed, the camera module 155 may include a plurality of cameras. The camera module 155 may be embedded above the display 180 in the image display apparatus 100, or may be separately configured. Image information captured by the camera module 155 may be provided to the controller 170.

The controller 170 may sense a user's gesture from a captured image received from the camera module 155 or from signals received from the sensor unit (not shown) alone or in combination.

The remote controller 200 transmits a user input to the user input interface 150. For the transmission of a user input, the remote controller 200 may operate based on various communication standards such as Bluetooth, RF, IR, Ultra WideBand (UWB), ZigBee, etc. In addition, the remote controller 200 may receive a video signal, audio signal and/or data signal from the user input interface 150 and output the received signal as an image or sound.

The above-described image display apparatus 100 may be a fixed or mobile digital broadcast receiver.

The image display apparatus may cover a TV receiver, a monitor, a portable phone, a smart phone, a laptop computer, a digital broadcasting terminal, a Personal Digital Assistant (PDA), a Personal Multimedia Player (PMP), etc.

The block diagram of the image display apparatus 100 illustrated in FIG. 3 is an exemplary embodiment of the present invention. The image display apparatus 100 is shown in FIG. 3 as having a number of components in a given configuration. However, the image display apparatus 100 may include fewer components or more components than those shown in FIG. 3 in alternative embodiments. Also, two or more components of the image display apparatus 100 may be combined into a single component or a single component thereof may be separated into two more components in alternative embodiments. The functions of the components of the image display apparatus 100 as set forth herein are illustrative in nature and may be modified, for example, to meet the requirements of a given application.

Unlike the configuration illustrated in FIG. 3, the image display apparatus 100 may be configured so as to receive and playback video content through the network interface 130 or the external device interface 135, without the tuner unit 100 and the demodulator 120.

The image display apparatus 100 is an example of an image signal processing apparatus that processes an input or stored image. In another example, the image display apparatus 100 may be implemented into a set-top box without the display 180 and the audio output unit 185 illustrated in FIG. 3, a DVD player, a Blue-ray player, a game console, a computer, etc.

FIG. 4 is a block diagram of the controller illustrated in FIG. 3.

Referring to FIG. 4, the controller 170 may include a DEMUX 310, a video processor 320, a processor 330, an OSD generator 340, a mixer 350, a Frame Rate Converter (FRC) 350, and a formatter 360 according to an embodiment of the present invention. The controller 170 may further include an audio processor (not shown) and a data processor (not shown).

The DEMUX 310 demultiplexes an input stream. For example, the DEMUX 310 may demultiplex an MPEG-2 TS into a video signal, an audio signal, and a data signal. The input stream signal may be received from the tuner unit 110, the demodulator 120 or the external device interface 130.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal can be displayed on the display 180.

The video decoder 325 may be provided with decoders that operate in conformance with various standards.

The decoded video signal processed by the video processor 320 may be a 2D video signal, a 3D video signal, or a combination of both.

For example, it may be determined whether an external video signal received from an external device or a video signal included in a broadcast signal received from the tuner unit 110 is a 2D signal, a 3D signal, or a combination of both. Accordingly, the controller 170, particularly the video processor 320 processes the video signal and outputs a 2D video signal, a 3D video signal, or a combination of both.

The decoded video signal from the video processor 320 may have any of various available formats. For example, the decoded video signal may be a 3D video signal with a color image and a depth image or a 3D video signal including multi-viewpoint image signals. The multi-viewpoint image signals may include, for example, a left-eye image signal and a right-eye image signal.

For 3D visualization, 3D formats illustrated in FIG. 4 are available. The 3D formats are a side-by-side format, a top/down format, a frame sequential format, an interlaced format, and a checker box format. A left-eye image L and a right-eye image R are arranged side by side in the side by side format. The left-eye image L and the right-eye image R are stacked vertically in the top/down format, while they are arranged in time division in the frame sequential format. In the interlaced format, the left-eye image L and the right-eye image R alternate line by line. The left-eye image L and the right-eye image R are mixed on a box basis in the checker box format.

The processor 330 may provide overall control to the image display apparatus 100 or the controller 170. For example, the processor 330 may control the tuner unit 110 to tune to an RF broadcasting corresponding to a user-selected channel or a pre-stored channel.

The processor 330 may also control the image display apparatus 100 according to a user command received through the user input interface 150 or an internal program.

The processor 330 may control data transmission through the network interface 135 or the external device interface 130.

The processor 330 may control operations of the DEMUX 310, the video processor 320, and the OSD generator 340 in the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a User Interface (UI), a variety of menus, widgets, icons, etc. Also, the OSD signal may include a 2D object and/or a 3D object.

Further, the OSD generator 340 may generate a pointer to be displayed on the display 180 based on a pointing signal received from the remote controller 200. Especially, the pointer may be generated from a pointing signal processor (not shown), which may reside in the OSD generator 340. Obviously, the pointing signal processor may be configured separately.

The mixer 345 may mix the decoded video signal processed by the video processor 320 with the OSD signal generated from the OSD generator 340. The OSD signal and the decoded video signal each may include at least one of a 2D signal or a 3D signal. The mixed video signal is provided to the FRC 350.

The FRC 350 may change the frame rate of the mixed video signal or simply output the mixed video signal without frame rate conversion.

The formatter 360 may arrange left-eye and right-eye video frames of the frame rate-converted 3D image.

The formatter 360 may receive the mixed signal, namely the OSD signal and the decoded video signal in combination form the mixer 345 and may separate a 2D video signal from a 3D video signal.

Herein, a 3D video signal refers to a signal including a 3D object such as a Picture-In-Picture (PIP) image (a still image or a video), an EPG that describes broadcast programs, a menu, a widget, an icon, text, an object within an image, a person, a background, or a Web page (e.g. from a newspaper, a magazine, etc.).

The formatter 360 may change the format of the 3D video signal. For example, if a 3D image is received in one of the above-described 3D formats, the formatter 360 may change the 3D image in such a manner that multi-viewpoint images are repeated. Accordingly, a glasses-free 3D image may be displayed.

Meanwhile, the formatter 360 may convert a 2D video signal to a 3D video signal. For example, the formatter 360 may detect edges or a selectable object from the 2D video signal and generate a 3D video signal with an object based on the detected edges or the selectable object. As described before, the 3D video signal may be a multi-viewpoint image signal.

A 3D processor (not shown) may further be provided after the formatter 360, for processing a signal to exert 3D effects. For enhancing 3D effects, the 3D processor may adjust the brightness, tint, and color of a video signal.

The audio processor (not shown) of the controller 170 may process the demultiplexed audio signal. For the audio signal processing, the audio processor may have a plurality of decoders.

The audio processor of the controller 170 may also adjust the bass, treble, and volume of the audio signal.

The data processor (not shown) of the controller 170 may process the data signal obtained by demultiplexing the input stream signal. For example, if the demultiplexed data signal is a coded data signal, the data processor may decode the coded data signal. The coded data signal may be an EPG which includes broadcast information specifying the start time, end time, etc. of scheduled broadcast TV or radio programs.

While it is shown in FIG. 4 that the mixer 345 mixes signals received from the OSD generator 340 and the video processor 320 and then the formatter 360 performs 3D processing on the mixed signal, to which the present invention is not limited, the mixer 345 may be positioned after the formatter 360. That is, the formatter 360 may subject an output of the video processor 320 to a 3D process, the OSD generator 340 may generate an OSD signal and perform a 3D process on the OSD signal, and then the mixer 345 may mix the processed 3D signals received from the formatter 360 and the OSD generator 340.

The block diagram of the image display apparatus 100 illustrated in FIG. 4 is purely exemplary. Depending upon the specifications of the image display apparatus 100 in actual implementation, the components of the image display apparatus 100 may be combined or omitted or new components may be added. That is, two or more components are incorporated into one component or one component may be configured as separate components, as needed.

Especially, the FRC 350 and the formatter 360 may be configured separately outside the controller 170.

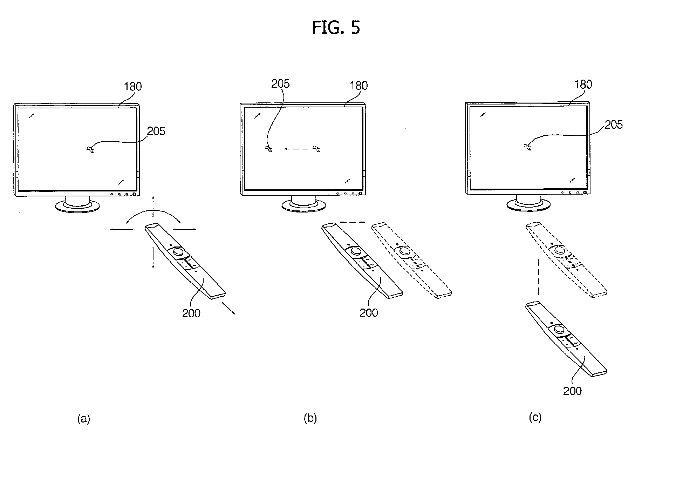

FIG. 5 illustrates a method for controlling the remote controller illustrated in FIG. 3.

FIG. 5(a) illustrates a pointer 205 representing movement of the remote controller 200, displayed on the display 180.

The user may move or rotate the remote controller 200 up and down, side to side (FIG. 5(b)), and back and forth (FIG. 5(c)). Since the pointer 205 moves in accordance with the movement of the remote controller 200 in a 3D space, the remote controller 200 may be referred to as a pointing device.

Referring to FIG. 5(b), if the user moves the remote controller 200 to the left, the pointer 205 moves to the left on the display 180.

A sensor of the remote controller 200 detects the movement of the remote controller 200 and transmits motion information corresponding to the result of the detection to the image display apparatus. Then, the image display apparatus may determine the movement of the remote controller 200 based on the motion information received from the remote controller 200, and calculate the coordinates of a target point to which the pointer 205 should be shifted in accordance with the movement of the remote controller 200 based on the result of the determination. The image display apparatus then displays the pointer 205 at the calculated coordinates.

Referring to FIG. 5(c), while pressing a predetermined button of the remote controller 200, the user moves the remote controller 200 away from the display 180. Then, a selected area corresponding to the pointer 205 may be zoomed in and enlarged on the display 180. On the contrary, if the user moves the remote controller 200 toward the display 180, the selection area corresponding to the pointer 205 is zoomed out and thus contracted on the display 180. The opposite case is possible. That is, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The speed and direction of the pointer 205 may correspond to the speed and direction of the remote controller 200.

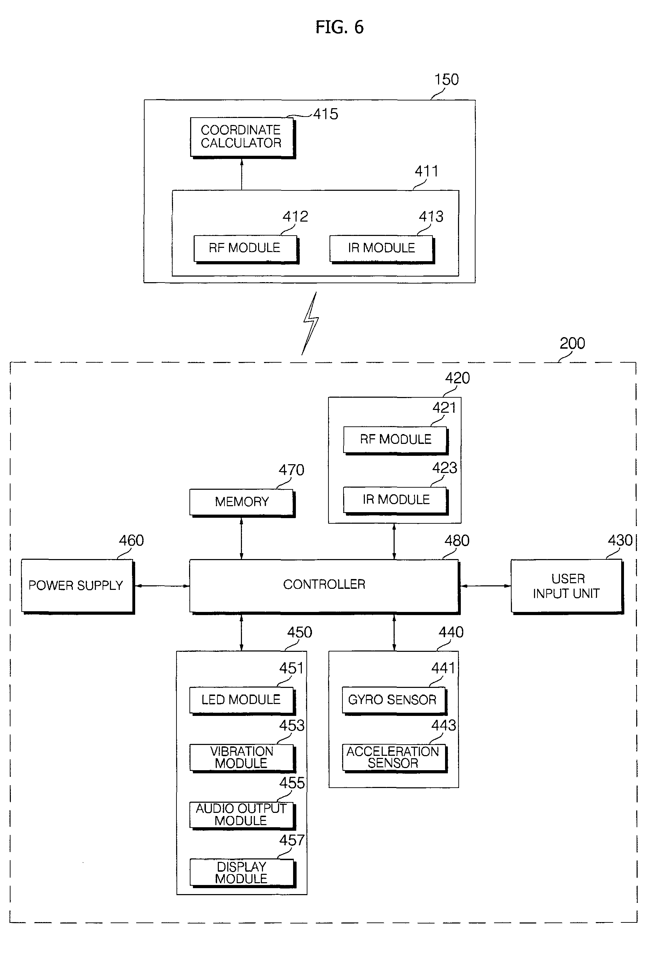

FIG. 6 is a block diagram of the remote controller illustrated in FIG. 3.

Referring to FIG. 6, the remote controller 200 may include a wireless communication module 420, a user input unit 430, a sensor unit 440, an output unit 450, a power supply 460, a memory 470, and a controller 480.

The wireless communication module 420 transmits signals to and/or receives signals from the image display apparatus 100.

In the embodiment of the present invention, the wireless communication module 420 may include an RF module 421 for transmitting RF signals to and/or receiving RF signals from the image display apparatus 100 according to an RF communication standard. The wireless communication module 420 may also include an IR module 423 for transmitting IR signals to and/or receiving IR signals from the image display apparatus 100 according to an IR communication standard.

The remote controller 200 transmits motion information regarding the movement of the remote controller 200 to the image display apparatus 100 through the RF module 421 in the embodiment of the present invention.

The remote controller 200 may also receive signals from the image display apparatus 100 through the RF module 221. The remote controller 200 may transmit commands, such as a power on/off command, a channel switching command, or a sound volume change command, to the image display apparatus 100 through the IR module 423, as needed.

The user input unit 430 may include a keypad, a plurality of buttons, a touch pad, or a touch screen. The user may enter commands to the image display apparatus 100 by manipulating the user input unit 430. If the user input unit 430 includes a plurality of hard-key buttons, the user may input various commands to the image display apparatus 100 by pressing the hard-key buttons. Alternatively or additionally, if the user input unit 430 includes a touch screen displaying a plurality of soft keys, the user may input various commands to the image display apparatus 100 by touching the soft keys. The user input unit 430 may also include various input tools other than those set forth herein, such as a scroll key and/or a jog key, which should not be construed as limiting the present invention.

The sensor unit 440 may include a gyro sensor 441 and/or an acceleration sensor 443. The gyro sensor 441 may sense the movement of the remote controller 200.

For example, the gyro sensor 441 may sense motion information about the remote controller 200 in X-, Y-, and Z-axis directions. The acceleration sensor 443 may sense the moving speed of the remote controller 200. The sensor unit 440 may further include a distance sensor for sensing the distance between the remote controller 200 and the display 180.

The output unit 450 may output a video and/or audio signal corresponding to a manipulation of the user input unit 430 or a signal transmitted by the image display apparatus 100. The user may easily identify whether the user input unit 430 has been manipulated or whether the image display apparatus 100 has been controlled based on the video and/or audio signal output from the output unit 450.

The output unit 450 may include a Light Emitting Diode (LED) module 451 which is turned on or off whenever the user input unit 430 is manipulated or whenever a signal is received from or transmitted to the image display apparatus 100 through the wireless communication module 420, a vibration module 453 which generates vibrations, an audio output module 455 which outputs audio data, and a display module 457 which outputs an image.

The power supply 460 supplies power to the remote controller 200. If the remote controller 200 is kept stationary for a predetermined time or longer, the power supply 460 may, for example, reduce or cut off supply of power to the remote controller 200 in order to save power. The power supply 460 may resume supply of power if a specific key on the remote controller 200 is manipulated.

The memory 470 may store various application data for controlling or operating the remote controller 200. The remote controller 200 may wirelessly transmit signals to and/or receive signals from the image display apparatus 100 in a predetermined frequency band through the RF module 421. The controller 480 of the remote controller 200 may store information regarding the frequency band used for the remote controller 200 to wirelessly transmit signals to and/or wirelessly receive signals from the paired image display apparatus 100 in the memory 470 and may then refer to this information for use at a later time.

The controller 480 provides overall control to the remote controller 200. For example, the controller 480 may transmit a signal corresponding to a key manipulation detected from the user input unit 430 or a signal corresponding to motion of the remote controller 200, as sensed by the sensor unit 440, to the image display apparatus 100 through the wireless communication module 420.

The user input interface 150 of the image display apparatus 100 may include a wireless communication module 411 for wirelessly transmitting signals to and receiving signals from the remote controller 200 and a coordinate calculator 415 for calculating the coordinates of a pointer in correspondence with movement of the remote controller 200.

The user input interface 150 may wirelessly transmit signals to and receive signals from the remote controller 200 through an RF module 412. In addition, the user input interface 150 may receive a signal from the remote controller 200 through an IR module 413 in conformance to an IR communication standard.

The coordinate calculator 415 may calculate target (x, y) coordinates at which the pointer 205 is to be displayed on the display 170 by correcting a hand tremor or an error from a signal corresponding to movement of the remote controller 200, received through the wireless communication module 411.

A signal received from the remote controller 200 through the user input interface 150 is provided to the controller 170 of the image display apparatus 100. The controller 170 may identify information related to an operation of the remote controller 200 or a key manipulation in the remote controller 200 and may accordingly control the image display apparatus 100.

In another example, the remote controller 200 may calculate the coordinates of a pointer corresponding to its movement and output the calculated coordinates to the user input interface 150 of the image display apparatus 100. In this case, the user input interface 150 of the image display apparatus 100 may transmit information about the received coordinates of the pointer without correction of a hand tremor or an error to the controller 170.

Unlike the configuration of FIG. 6, the coordinate calculator 415 may be included in the controller 170, not in the user input interface 150.

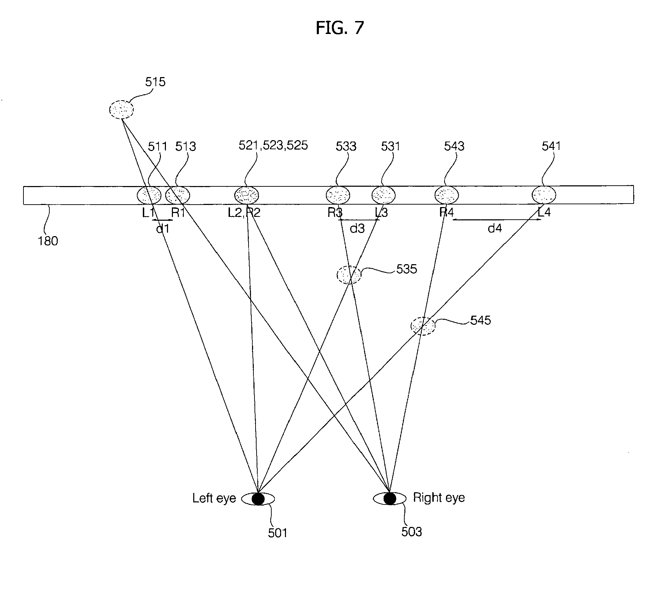

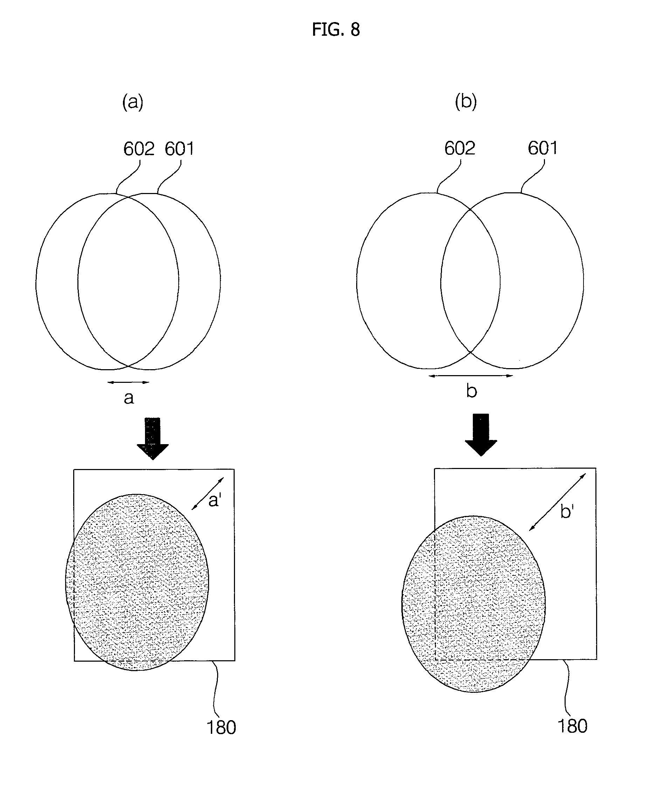

FIG. 7 illustrates formation of 3D images by combining left-eye and right-eye images, and FIG. 8 illustrates different depth illusions according to different disparities between a left-eye image and a right-eye image.

Referring to FIG. 7, there are a plurality of images or objects 515, 525, 535 and 545.

A first object 515 is created by combining a first left-eye image 511 (L1) based on a first left-eye image signal with a first right-eye image 513 (R1) based on a first right-eye image signal, with a disparity d1 between the first left-eye and right-eye images 511 and 513. The user sees an image as formed at the intersection between a line connecting a left eye 501 to the first left-eye image 511 and a line connecting a right eye 503 to the first right-eye image 513. Therefore, the user is tricked into perceiving the first object 515 as located behind the display 180.

As a second object 525 is created by overlapping a second left-eye image 521 (L2) with a second right-eye image 523 (R2) on the display 180, thus with a disparity of 0 between the second left-eye and right-eye images 521 and 523. Thus, the user perceives the second object 525 as on the display 180.

A third object 535 is created by combining a third left-eye image 531 (L3) with a third right-eye image 533 (R3), with a disparity d3 between the third left-eye and right-eye images 531 and 533. A fourth object 545 is created by combining a fourth left-eye image 541 (L4) with a fourth right-eye image 543 (R4), with a disparity d4 between the fourth left-eye and right-eye images 541 and 543.

The user perceives the third and fourth objects 535 and 545 at image-formed positions, that is, as positioned before the display 180.

Because the disparity d4 between the fourth left-eye and right-eye images 541 and 543 is larger than the disparity d3 between the third left-eye and right-eye images 531 and 533, the fourth object 545 appears more protruding than the third object 535.

In embodiments of the present invention, the distances between the display 180 and the objects 515, 525, 535 and 545 are represented as depths. When an object is perceived to the user as being positioned behind the display 180, the depth of the object is negative-signed. On the other hand, when an object is perceived to the user as being positioned before the display 180, the depth of the object is positive-signed. Therefore, as an object appears more protruding to the user, it is deeper, that is, its depth is larger.

Referring to FIG. 8, the disparity a between a left-eye image 601 and a right-eye image 602 in FIG. 8(a) is smaller than the disparity b between the left-eye image 601 and the right-eye image 602 in FIG. 8(b). Consequently, the depth a' of a 3D object created in FIG. 8(a) is smaller than the depth b' of a 3D object created in FIG. 8(b).

In the case where a left-eye image and a right-eye image are combined into a 3D image, if the left-eye and right-eye images of 3D images are apart from each other by different disparities, the 3D images are perceived to the user as formed at different positions. This means that the depth of a 3D image or 3D object formed with a left-eye image and a right-eye image in combination may be controlled by adjusting the disparity of the left-eye and right-eye images.

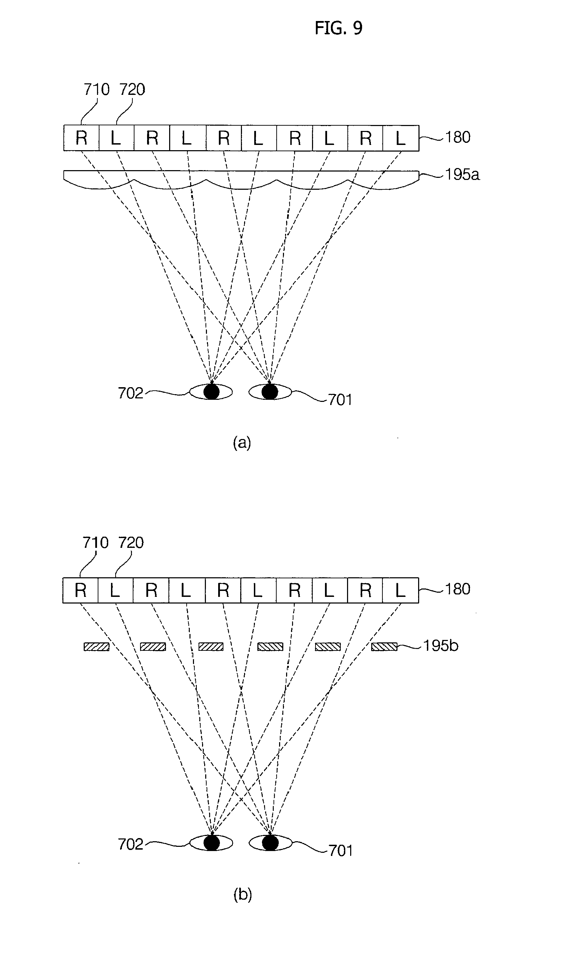

FIG. 9 is a view referred to for describing the principle of a glasses-free 3D image display apparatus.

As described before, the glasses-free 3D image display apparatus operates in a lenticular scheme, a parallax scheme, or a microlens array scheme. The lenticular scheme and the parallax scheme will be described below in detail. While the following description is given in the context of two viewpoint images, i.e. a left-eye image and a right-eye image, this should not be construed as limiting the present invention.

FIG. 9(a) illustrates the lenticular scheme using a lenticular lens. Referring to FIG. 9(a), blocks 720 (L) of a left-eye image and blocks 710 (R) of a right-eye image may be arranged alternately on the display 180. Each block may include one or more pixels. Hereinbelow, it is assumed that each block includes a single pixel.

In the lenticular scheme, the lens unit 195 includes a lenticular lens 195a. The lenticular lens 195a, which is positioned in front of the display 180, may change the travel direction of light emitted from the pixels 710 and 720. For example, the lenticular lens 195a may steer light emitted from the pixels 720 (L) of the left-eye image toward the left eye 702 of a viewer, whereas the lenticular lens 195a may steer light emitted from the pixels 721 (R) of the right-eye image toward the right eye 701 of the viewer.

As light emitted from the pixels 720 (L) of the left-eye image is combined at the left eye 702, the viewer sees the left-eye image with the left eye 702. In addition, as light emitted from the pixels 710 (R) of the right-eye image is combined at the right eye 701, the viewer sees the right-eye image with the right eye 701. Therefore, the viewer is tricked into perceiving a 3D image without wearing special glasses.

FIG. 9(b) illustrates the parallax scheme using a slit array. Referring to FIG. 9(b), the pixels 720 (L) of the left-eye image may alternate with the pixels 710 (R) of the right-eye image on the display 180, as illustrated in FIG. 9(a). In the parallax scheme, a slit array 195b is arranged in the lens unit 195. Since the slit array 195b serves as a barrier, it makes light emitted from pixels travel in a predetermined direction. Thus, the viewer sees the left-eye image with the left eye 702 and the eight-eye image with the right eye 701, as in the lenticular scheme. As a consequence, the viewer is tricked into perceiving a 3D image without wearing special glasses.

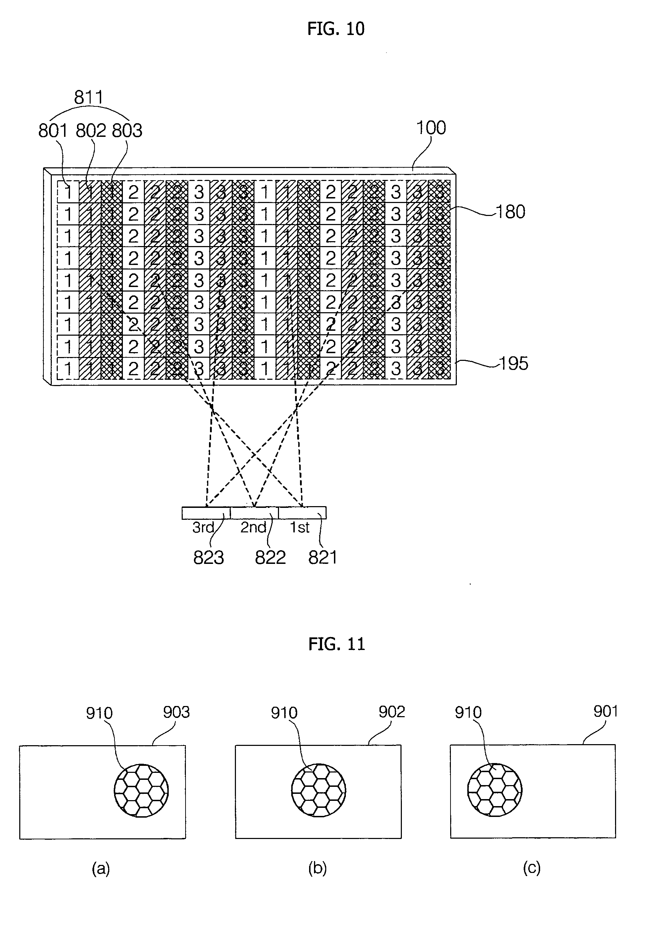

FIGS. 10 to 14 are views referred to for describing the principle of an image display apparatus that displays multi-viewpoint images.

Referring to FIG. 10, the image display apparatus 100 has three viewpoint areas 821, 822 and 823. A part of pixels forming three viewpoint images displayed in the respective three viewpoint areas 821, 822 and 823 may be rearranged on the display 180. Pixel rearrangement does not refer to changing the physical positions of pixels. Rather, pixel rearrangement means changing the values of pixels displayed on the display 180.

The three viewpoint images may be images of an object 910 captured from different directions, as illustrated in FIG. 11.

A first pixel 811 displayed on the display 180 may include first, second, and third sub-pixels 801, 802 and 803. Each of the first, second, and third sub-pixels 801, 802 and 803 may be a sub-pixel representing red, green, or blue.

While the pixels of the three viewpoint images are rearranged in a specific pattern in FIG. 10, to which the present invention is not limited, various patterns are available for pixel rearrangement depending on the lens unit 915.

The sub-pixels 801, 802 and 803 labeled with number 1 may form the first viewpoint image, the sub-pixels labeled with number 2 may form the second viewpoint image, and the sub-pixels labeled with number 3 may form the third viewpoint image.

Accordingly, the sub-pixels labeled with number 1 may be combined into the first viewpoint image in the first viewpoint area 821, the sub-pixels labeled with number 2 may be combined into the second viewpoint image in the second viewpoint area 822, and the sub-pixels labeled with number 3 may be combined into the third viewpoint image in the third viewpoint area 823.

Referring to FIG. 11, first, second, and third viewpoint images 901, 902 and 903 are images displayed according to different viewpoint directions. Specifically, the first viewpoint image 901 may be an image of the object 910 captured from a first viewpoint direction, the second viewpoint image 902 may be an image of the object 910 captured from a second viewpoint direction, and the third viewpoint image 903 may be an image of the object 910 captured from a third viewpoint direction.

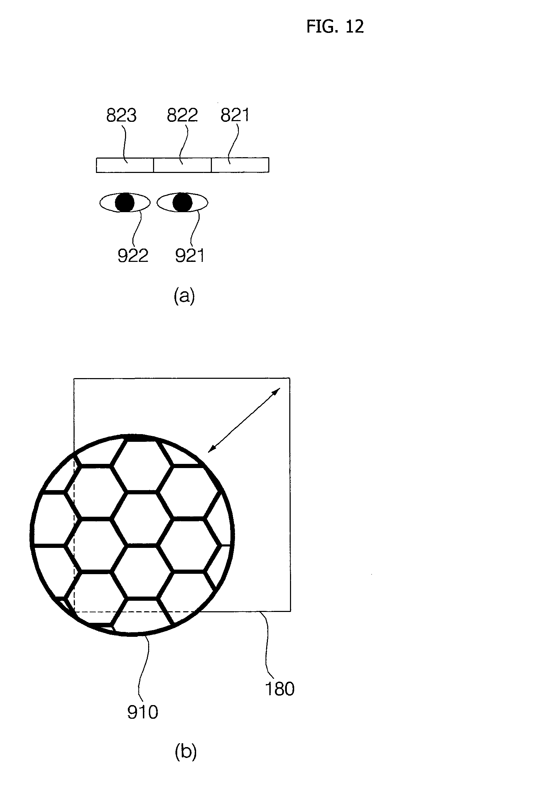

Referring to FIG. 12(a), in the case where the left eye 922 and right eye 921 of a viewer are positioned in the third and second viewpoint areas 823 and 822, respectively, the viewer sees the third viewpoint image 903 with the left eye 922 of the viewer and the second viewpoint image 902 with the right eye 921 of the viewer. Therefore, the viewer perceives the object 910 as positioned before the display 180 without wearing special glasses based on the principle described before with reference to FIG. 7, as illustrated in FIG. 12(b). In the case where the left eye 922 and right eye 921 of the viewer are positioned in the second and first viewpoint areas 822 and 821, respectively, the viewer can also perceive the object 910 as a 3D image.

If the pixels of multi-viewpoint images are rearranged only in a horizontal direction as illustrated in FIG. 10, the horizontal resolution of the resulting 3D image is reduced to I/n (n is the number of multi-viewpoint images), relative to that of a 2D image. For example, the horizontal resolution of the 3D image is reduced to a third of that of a 2D image in FIG. 10. On the other hand, the vertical resolution of the 3D image is equal to that of the multi-viewpoint images 901, 902 and 903 prior to rearrangement.

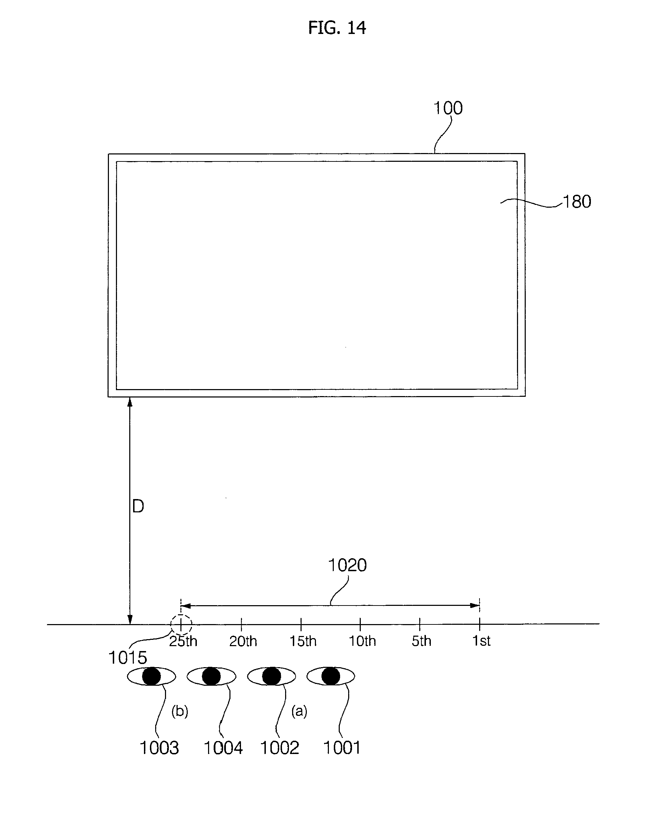

If there are many per-direction viewpoint images (the reason for having to increase the number of viewpoint images will be described later with reference to FIG. 14), only the horizontal resolution is decreased, relative to the vertical resolution. The resulting serious resolution imbalance may bring about the overall quality degradation of the 3D image.

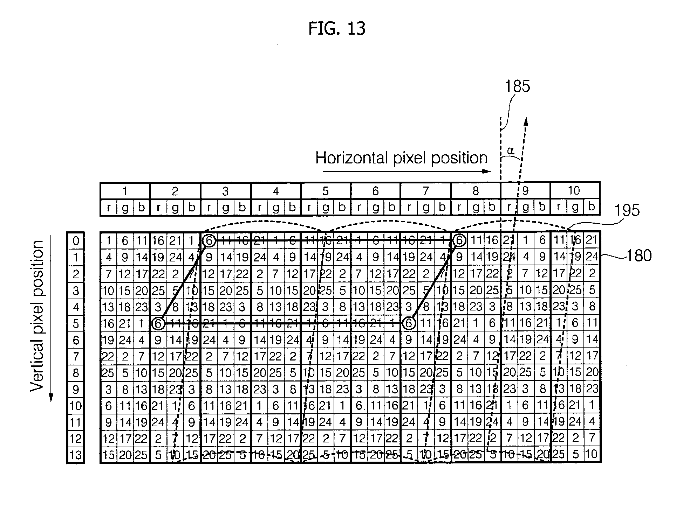

To avert this problem, the lens unit 915 may be disposed in front of the display 180, inclined at a specific angle a with respect to a vertical axis 185 of the display 180 and the sub-pixels of multi-viewpoint images may be rearranged in various patterns according to the inclined angle of the lens unit 195, as illustrated in FIG. 13. FIG. 13 illustrates an image display apparatus having 25 per-direction multi-viewpoint images according to an embodiment of the present invention. The lens unit 915 may be a lenticular lens or a slit array.

Referring to FIG. 13, when the lens unit 195 is positioned inclined, the red sub-pixel of a sixth viewpoint image may appear every five pixels horizontally and vertically. Then the horizontal and vertical resolutions of the resulting 3D image may be reduced to a fifth of those of per-direction multi-viewpoint images prior to rearrangement. Compared to a conventional scheme in which only the horizontal direction is reduced to 1/25, this scheme overcomes resolution imbalance.

FIG. 14 is a view referred to for describing a sweet zone and a dead zone that are formed in front of an image display apparatus.

Despite the advantage of no need for wearing special glasses to view a 3D image, the above-described 3D image viewing scheme using the image display apparatus 100 limits the 3D effect to a specific area. A viewer can view the best image in a certain area. This area may be defined by an Optimum Viewing Distance (OVD), D and a sweet zone 1020. The OVD, D may be determined by the disparity between left and right eyes, the pitch of the lens unit, and the focal distance of a lens. The sweet zone 1020 is an area in which multi-viewpoint images are sequentially arranged, thereby giving a stable 3D effect to a viewer. Referring to FIG. 14, when the viewer is positioned in the sweet zone 1020, as indicated by reference character (a), the viewer sees 12^{th} to 14^{th} viewpoint images with a right eye 1001 and 17^{th} to 19^{th} viewpoint images with a left eye 1002 and thus per-direction multi-viewpoint images may be perceived sequentially to the left and right eyes 1002 and 1003. Therefore, the viewer may feel a stereoscopic sense by left-eye and right-eye images, as described before with reference to FIG. 12.

In contrast, if the viewer is positioned in a dead zone 1015 outside the sweet zone 1020, as indicated by reference character (b), for example, if the viewer sees first to third viewpoint images with a left eye 1003 and 23^{th} to 25^{th} viewpoint images with a right eye 1004, per-direction multi-viewpoint images are not perceived sequentially to the left eye 1003 and the right eye 1004. In this case, the left-eye image and the right-eye image may be reversed, giving no stereoscopic sense to the viewer. Moreover, when the first and 25^{th} viewpoint images are perceived together to the left eye 1003 or the right eye 1004, the viewer may feel dizzy.

Accordingly, the image display apparatus 100 should track the position of a viewer and display multi-view point images so that the viewer is positioned in the sweet zone 1020. To provide a stable 3D image to the viewer, there exists a need for a method for fast tracking the accurate position of a viewer.

In this context, an embodiment of the present invention provides an image display apparatus capable of fast tracking the accurate position of a viewer. The image display apparatus will be described below in detail.

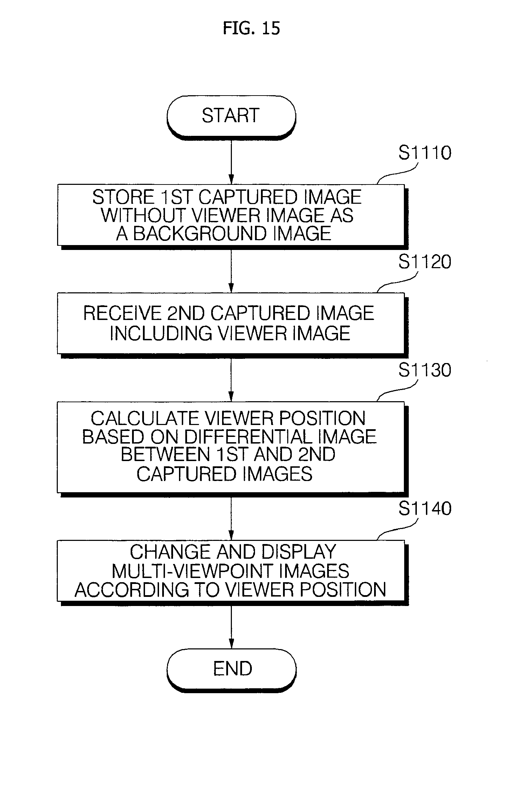

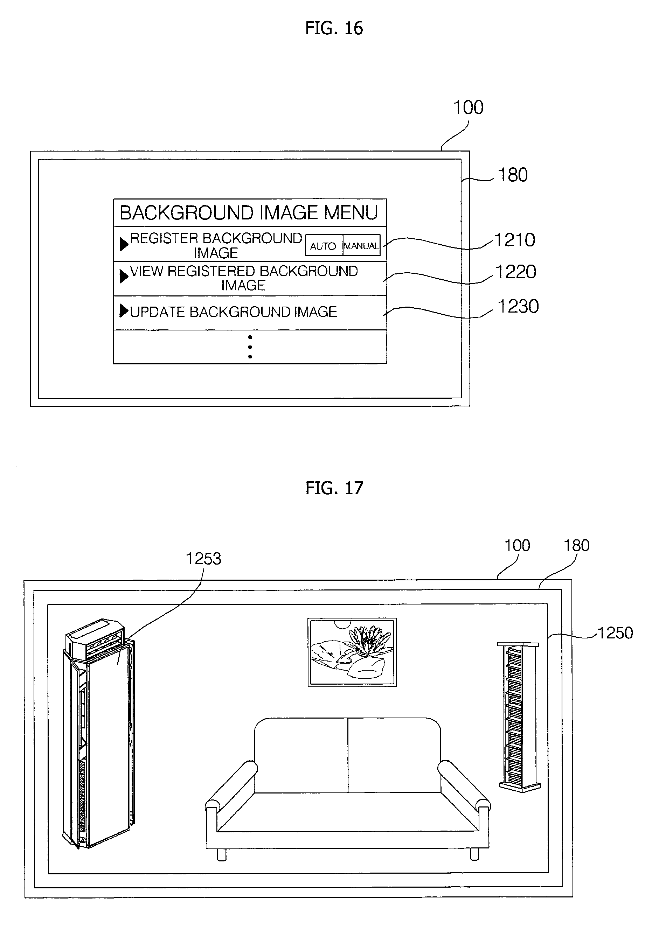

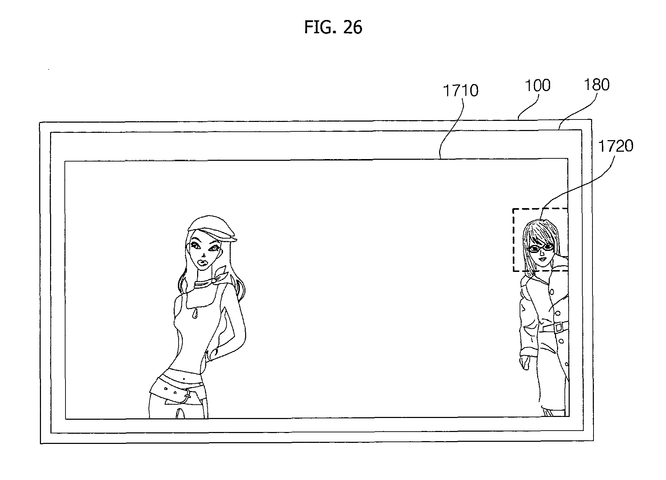

FIG. 15 is a flowchart illustrating a method for operating the image display apparatus according to an embodiment of the present invention, and FIGS. 16 to 27 are views referred to for describing the method for operating the image display apparatus, illustrated in FIG. 15.

In accordance with the present invention, the image display apparatus can efficiently track the position of a viewer by minimizing a viewer search area using a differential image between a background image and an image including a viewer image.

Referring to FIG. 16, the image display apparatus 100 enters a background image setting mode. For example, upon execution of a background image menu, a background image registration mode setting menu 1210, a view registered background image menu 1220, and an update background image menu 1230 are displayed.

The background image registration mode may be set to a automatic mode or a manual mode. If the background image registration mode is set to the manual mode, a viewer may capture and store a background image.

On the other hand, if the background image registration mode is set to the automatic mode, the controller 170 determines whether a received first captured image includes a viewer image. In the absence of a viewer image in the first captured image, the image display apparatus 100 stores the first captured image as a background image (S1110).

If a first captured image 1250 received by the controller 170 does not include an image of a viewer or a viewer-like object or if object images included in the first captured image 1250 have not been moved in a comparison between the current captured image 1250 and a previous captured image as illustrated in FIG. 17, the first captured image does not include a viewer image.

For example, images of furniture (an air conditioner and a sofa) included in the first captured image 1250 are not regarded as viewer images. In regards to a person image in a framed picture, the person image is not regarded as a viewer image because a human face may be sensed but no movement of the human face is sensed. Thus, the first captured image 1250 may be stored as a background image.

An object image may be pre-stored to be recognized as a background image. For example, if object images that are not exactly viewer images but that are readily regarded as viewer images are pre-stored, the controller 170 may fast extract a background image and thus reduce detection of a wrong viewer image.

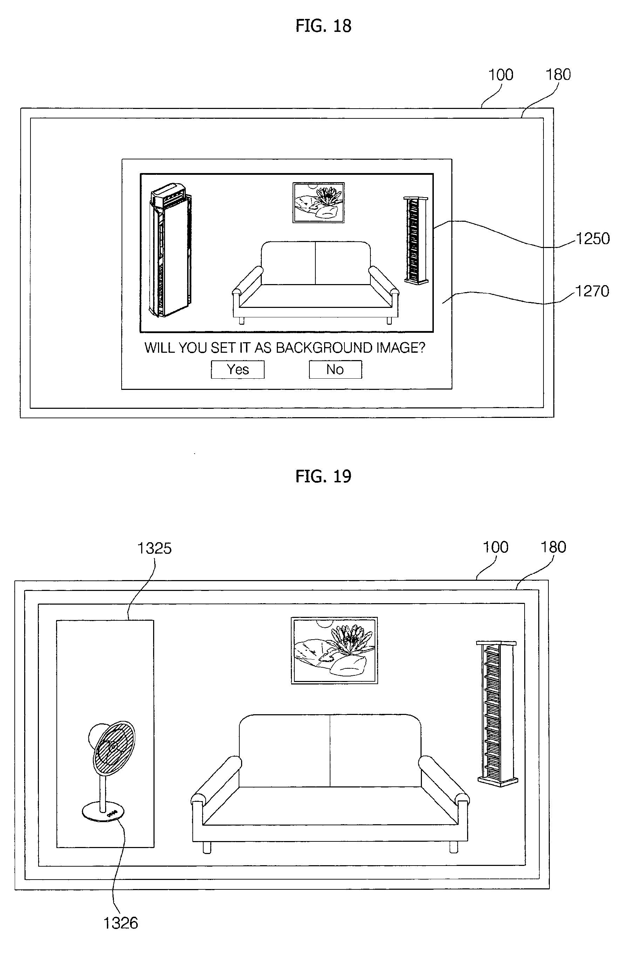

The controller 170 may store a background image directly. Alternatively or additionally, the controller 170 may display a message 1270 asking a viewer whether to store the first captured image 1250 as a background image in order to store a background image according to a selection input of the viewer, as illustrated in FIG. 18.

If the background image is pre-stored, the viewer image can be efficiently detected based on a differential image between the background image and a captured image, which will be described later.

Meanwhile, if the image display apparatus 100 is moved to another position due to home relocation or rearrangement of the image display apparatus 100, the background image is changed and thus it is necessary to update the background image.

The background image update may be performed periodically or upon receipt of a background image update input.

For example, if at least one of movement of the image display apparatus 100, a change in the Internet Protocol (IP) address of the image display apparatus 100, or a change in power position information about the image display apparatus 100 is sensed, the background image may be updated.

If the image display apparatus 100 is provided with a gyro sensor or an acceleration sensor and thus motion information about the image display apparatus 100 and movement of the image display apparatus 100 are sensed, the background image may be updated.

In the case where the image display apparatus 100 has been moved, connection between a network and the image display apparatus 100 at the changed position or turn-on of the image display apparatus 100 using a changed power voltage at the changed position may lead to a change in the IP address or power position information of the image display apparatus 100. When the change in the IP address or power position information is sensed, the background image may be updated.

The registered background image may be updated partially. For example, the image display apparatus 100 may compare the existing registered background image with a current received background image and update only a different area of the existing background image.

If the background image update is set to a manual mode, the image display apparatus 100 may receive an input that selects the update background image menu 1230 of FIG. 16 and then update the registered background image to a new background image.

As described before, only a part of the existing background image may also be selected and updated in the case of the manual mode.

For instance, if furniture arrangement is partially changed (e.g. the air conditioner is replaced with a fan), an air conditioner image 1253 may be deleted or replaced with an image of the fan in the background image 1250 in FIG. 17.

Upon receipt of an input selecting an area to be updated in the background image 1250, an image in the area may be deleted or replaced with a new image.

Referring to FIG. 19, for example, an area 1325 including the air conditioner image 1253 may be selected using the remote controller 200 and then a new fan image 1326 may be included in the selected area 1325, for updating the background image. The area may be selected in a different size and shape.

When the background image is registered or updated as described above, the current registered background image may be viewed by selecting the view registered background image menu 1220 of FIG. 16.

Meanwhile, upon receipt of a second captured image including a viewer image (S1120), the controller 170 acquires a differential image between the background image and the second captured image and calculates the position of the viewer based on the differential image (S1130).

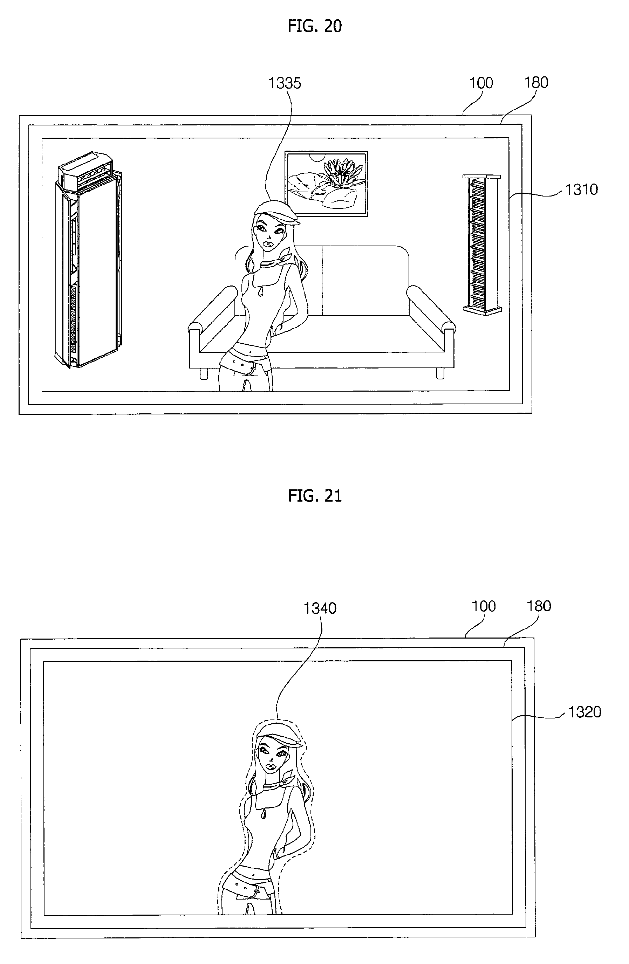

Referring to FIG. 21, for example, the controller 170 may acquire a differential image 1320 by comparing a second captured image 1310 including a viewer image 1335 in FIG. 20 with the registered background image 1250 in FIG. 17. The differential image 1320 may be acquired based on an area 1340 regarded as a viewer image. Accordingly, when the viewer is searched for by minimizing a search area based on the area 1340 in which the differential image 1320 is displayed, the accurate position of the viewer's face or eyes can be fast tracked, compared to a full area search.

Meanwhile, the image display apparatus 100 can provide a viewer candidate image registration function to enable fast tracking of the accurate position of a viewer in an embodiment of the present invention.

If a limited number of viewers view the image display apparatus 100 as in a household, a viewer can be readily identified through viewer candidate image registration.

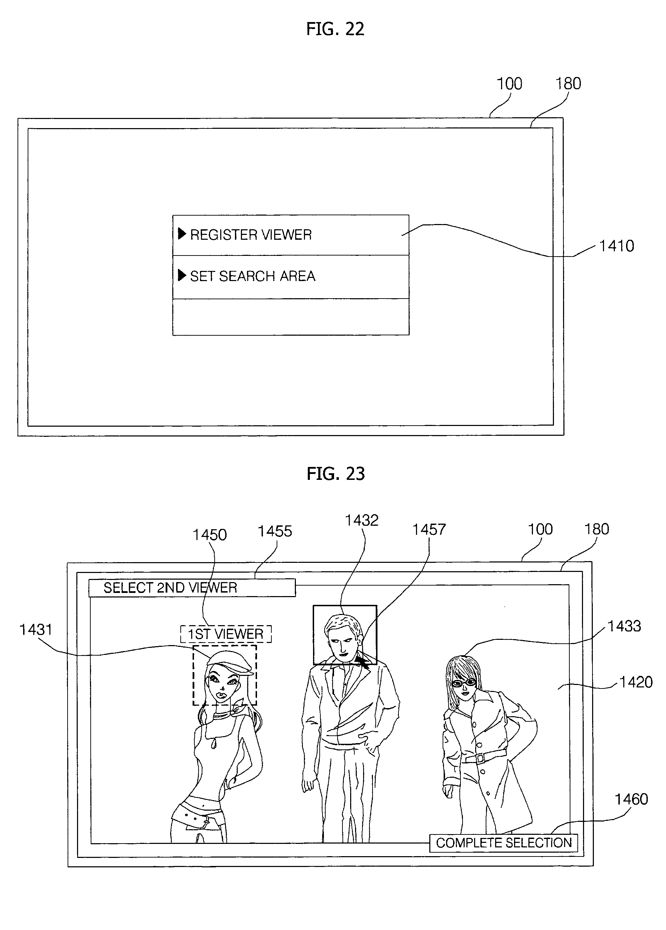

Referring to FIG. 22, when a viewer registration-related menu 1410 is displayed on the display 180 and an input for selecting the menu 1410 is received, the image display apparatus 100 may enter a viewer image registration mode. Upon receipt of a hot key related to viewer image registration, the image display apparatus 100 may also enter the viewer image registration mode. If an application related to viewer image registration is installed in the image display apparatus 100, the image display apparatus 100 may enter the viewer image registration mode by executing the application.

Referring to FIG. 23, in the viewer image registration mode, an image 1420 captured by the camera module 155 is displayed on the display 180 and the captured image 1420 may include one or more viewer images 1431, 1432, and 1433. Upon selection of a first viewer image 1431, the first viewer image 1431 is registered as a viewer candidate image and an object 1540 indicating that the first viewer has been registered as a candidate viewer is displayed on the display 180.

A message 1455 prompting a user to register another viewer candidate image is displayed on the display 180. A second viewer image 1432 may be registered as another viewer candidate image through an input 1457 that selects the second viewer image 1432. When all intended viewer images are selected for registration and an input that selects an object 1460 indicating complete selection is received, the viewer candidate image registration may end.

Upon sensing at least one of movement of the image display apparatus 100, a change in the IP address, region code, broadcasting scheme, or power position information of the image display apparatus 100, or power reconnection of the image display apparatus 100, the image display apparatus 100 may display a message requesting update of registered viewer images.

Once viewer candidate images are registered as described above, the controller 170 may track a viewer based on a viewer image registered as the viewer candidate image to calculate the position of the viewer.

For example, when template matching is adopted to detect a viewer's face (i.e. a template is compared with a captured image and a position is determined in the most similar part between them), use of a viewer image registered as the viewer candidate image rather than use of a template having a general facial shape may enable efficient calculation of a viewer's face in temporal and economical aspects and increase the accuracy of the calculated viewer's position.

If a face difficult to be recognized is registered as a viewer candidate image, the face can be easily recognized, thereby increasing a recognition rate.

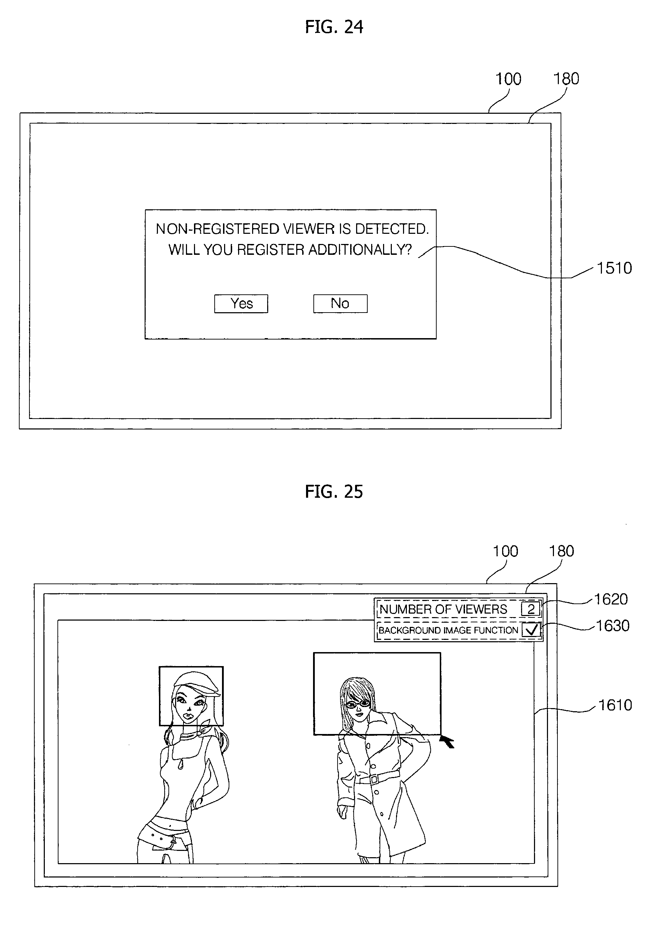

When a viewer image which has not been registered as the viewer candidate image is recognized, the controller 170 may display a message 1510 asking whether to register the non-registered viewer image as the viewer candidate image, as illustrated in FIG. 24.

If a non-registered viewer is temporarily viewing the image display apparatus 100, the non-registered viewer may be registered as a temporary viewer candidate.

For instance, if the non-registered viewer is a guest that will stay temporarily, an image of the non-registered viewer may be registered as the viewer candidate image only until the image display apparatus 100 is powered off. Upon power-off of the image display apparatus 100, the image of the non-registered viewer may be deleted as the viewer candidate image.

If a matching degree between an image of a viewer and a viewer image registered as the viewer candidate image is low or the viewer intends to continuously view the image display apparatus 100, the viewer image may be registered as the viewer candidate image.

With the above-described viewer candidate image registration function, the accurate position of the viewer can be tracked fast.

In addition, the image display apparatus 100 can provide a viewer search area setting function to recognize a position of viewer rapidly and accurately according to an embodiment of the present invention.

Upon selection of a search area setting menu in FIG. 22, a search area may be set to calculate the position of the viewer. For example, when the search area setting menu is selected, the image display apparatus 100 enters a search area setting mode and displays an image 1610 capturing viewers on the display 180, as illustrated in FIG. 25.

An object 1620 that allows input of the number of viewers and an object 1630 that allows selection of a background image function may further be displayed. The number of search areas may be set according to the number of viewers.

For example, if 2 is input as the number of viewers, two closed curves are displayed for setting search areas. The positions, shapes, or sizes of the search areas may also be set by shifting or dragging the closed curves.

When the viewer search area is set, the image display apparatus 100 calculates the position of the viewer based on the viewer search area. For example, the face or eyes of the viewer may be tracked by performing template matching first on the search area in the entire area of a captured image.

Accordingly, template matching of the set search area instead of template matching of an entire area increases a speed at which the viewer is located. As a consequence, template matching becomes efficient and the accuracy of calculating the viewer's position can be increased.

In addition, the viewer may be searched for based on a previous calculated viewer position. For example, when the viewer disappears during viewer search, the position of the viewer can be calculated based on information about the previous calculated viewer position.

If the viewer turns around or turns back to talk to another viewer while viewing the image display apparatus 100, the viewer may exist at the same position but the viewer's face may not be recognized. In this case, the viewer resumes viewing the image display apparatus 100 a certain time later and thus the viewer's face is highly likely to be recognized at the same position.

Therefore, when the viewer disappears while the viewer is being searched for, the viewer may be tracked by setting a search area centering on the previous viewer's position based on information about the previous calculated viewer's position. Consequently, the viewer can be fast located.

Meanwhile, when the viewer is not detected in the search area set around the previous calculated position for a predetermined time, the entire area may be searched for the viewer.

If the previous calculated viewer's position is at the edge of a viewing area of the image display apparatus 100 corresponding to the edge of a captured image 1710, the viewer is highly likely to disappear from the viewing area of the image display apparatus 100 and then return to the same position. Hence, when an image of the viewer disappears from the edge of the captured image, the viewer may be searched for by presetting a time longer than in the case where the viewer disappears from the center area of the captured image.

The search area may be determined according to the size of the searched image of the viewer and the viewer may set a search direction manually using the remote controller 200.

Meanwhile, the image display apparatus 100 may provide function execution-related information to the viewer by displaying a message notifying that the viewer image has not been detected, an image indicating that the viewer image is again searched for, a message that indicates multi-viewpoint images are being displayed according to the location of the viewer, etc.

Or, the search area may be set based on previous calculated depth information of the viewer. For example, the viewer is searched for, first at a previous calculated depth during tracking the viewer. If the viewer is not detected at the previous calculated depth, the viewer search is performed across depths ranging from the previous calculated depth to a total depth. Consequently, the viewer can be tracked fast and accurately.

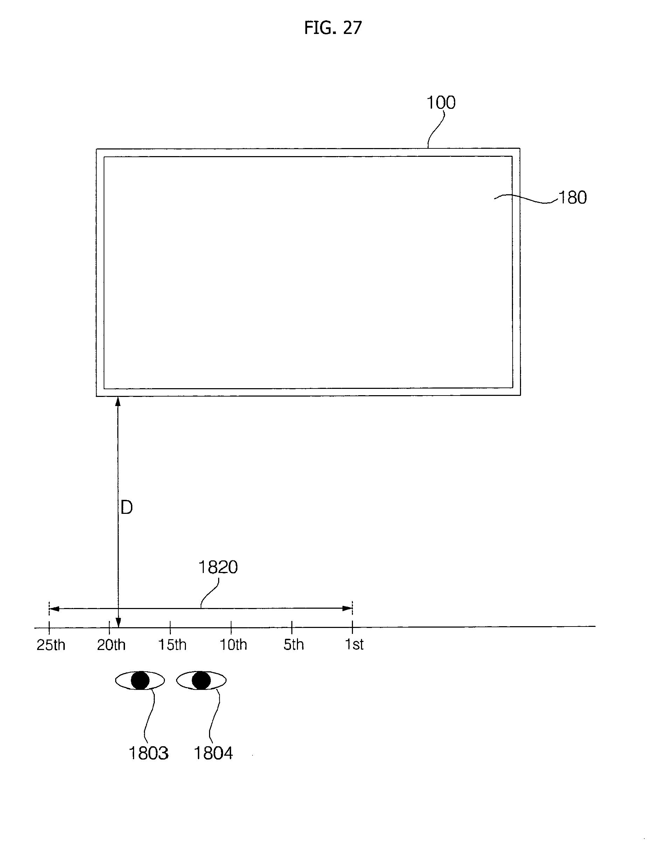

As described above in regards to the embodiments of the present invention, since the image display apparatus 100 has the background image registration function, the viewer candidate image registration function, and the search area setting function, it can accurately and fast calculate the position of the viewer. The image display apparatus can also display multi-viewpoint images in such a manner that the position of the viewer is within the sweet zone 1820 as illustrated in FIG. 27. As a result, per-direction viewpoint images are sequentially perceived to the right and left eyes 1804 and 1803 of the viewer, thereby giving a stable stereoscopic sense to the viewer.

According to the embodiments of the present invention, since the image display apparatus has the background image registration function, the viewer candidate image registration function, and the search area setting function, it can accurately and fast calculate the position of the viewer. The image display apparatus can also display multi-viewpoint images in such a manner that the position of the viewer is within a sweet zone. As a result, a stable stereoscopic sense is given to the viewer, increasing user convenience.

The image display apparatus and the method for operating the same according to the foregoing exemplary embodiments are not restricted to the exemplary embodiments set forth herein. Therefore, variations and combinations of the exemplary embodiments set forth herein may fall within the scope of the present invention.

The method for operating an image display apparatus according to the foregoing exemplary embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method for operating an image display apparatus that displays multi-viewpoint images, the method comprising:
storing a first captured image that does not include a viewer image being an image of a viewer as a background image;
calculating a position of the viewer based on a differential image between the background image and a second captured image including the viewer image; and
changing multi-viewpoint images based on the position of the viewer and displaying the changed multi-viewpoint images.

2. The method according to claim 1,
further comprising updating the background image, upon receipt of a background image update input,
wherein the background image update input is at least one of movement of the image display apparatus, a change in power position information about the image display apparatus, a change in an Internet Protocol (IP) address of the image display apparatus, or a selection input from a user.

3. The method according to claim 2,
wherein the updating of the background image comprises updating a part of the background image.

4. The method according to claim 1,
further comprising storing an object image to be recognized as the background image.

5. The method according to claim 1,
further comprising registering a viewer candidate image, wherein the calculation of a position of the viewer comprises calculating the position of the viewer based on the registered viewer candidate image.

6. The method according to claim 5,
further comprising, if the second captured image includes a non-registered viewer image, displaying a message asking whether to register the non-registered viewer image as the viewer candidate image.

7. The method according to claim 1,
further comprising setting a viewer search area,
wherein the calculation of a position of the viewer comprises calculating the position of the viewer based on the set viewer search area.

8. The method according to claim 1,
further comprising calculating the position of the viewer based on information about a last calculated position of the viewer, if the position of the viewer is not detected.

9. An image display apparatus comprising:
a display for displaying multi-viewpoint images;
a camera module for acquiring a first captured image that does not include a viewer image being an image of a viewer and a second captured image including the viewer image; and
a controller for changing multi-viewpoint images based on a position of the viewer calculated using a differential image between the background image and the second captured image, and displaying the changed multi-viewpoint images.

10. The image display apparatus according to claim 9,
wherein upon receipt of a background image update input, the controller updates the background image, and the background image update input is at least one of movement of the image display apparatus, a change in power position information about the image display apparatus, a change in an Internet Protocol (IP) address of the image display apparatus, or a selection input from a user.

11. The image display apparatus according to claim 9,
further comprising a memory for pre-storing an object image to be recognized as the background image.

12. The image display apparatus according to claim 9,
the controller calculates the position of the viewer based on a registered viewer candidate image.

13. The image display apparatus according to claim 12,
wherein if the second captured image includes a non-registered viewer image, the controller controls to display a message asking whether to register the non-registered viewer image as the viewer candidate image.

14. The image display apparatus according to claim 9,
wherein the controller controls to be seta viewer search area by user input and calculates the position of the viewer based on the set viewer search area.

15. The image display apparatus according to claim 9,
wherein if the position of the viewer is not detected, the controller calculates the position of the viewer based on information about a last calculated position of the viewer.
